(19) Europäisches Patentamt

European Patent Office

Office européen des brevets

(11) **EP 0 711 596 A1**

(12) **EUROPÄISCHE PATENTANMELDUNG**

(43) Veröffentlichungstag:
**15.05.1996 Patentblatt 1996/20**

(51) Int. Cl.[6]: **B01J 10/00**, B01J 12/00,
B01J 19/24, C01B 7/04

(21) Anmeldenummer: 95117249.3

(22) Anmeldetag: **02.11.1995**

(84) Benannte Vertragsstaaten:
**AT BE CH DE ES FR GB IT LI NL SE**

(30) Priorität: **14.11.1994 DE 4440632**

(71) Anmelder: **BAYER AG**
**D-51368 Leverkusen (DE)**

(72) Erfinder:
• **Dummersdorf, Hans-Ulrich, Dr.**
**D-51399 Burscheid (DE)**

• **Waldmann, Helmut, Dr.**
**D-51373 Leverkusen (DE)**
• **Härle, Helmut, Dr.**
**D-51375 Leverkusen (DE)**
• **Minz, Franz-Rudolf, Dr.**
**D-41542 Dormagen (DE)**
• **Gestermann, Fritz, Dr.**
**D-51377 Leverkusen (DE)**

(54) **Verfahren und Vorrichtung zur Förderung von heissen, aggressiven Medien**

(57) Bei dem Verfahren zur chemischen Reaktion von gasförmigen Edukten, werden die Edukte in einem Phasenkontaktapparat 1 in Gegenwart einer katalytisch wirkenden korrosiven Flüssigkeit zur Reaktion gebracht. Dabei wird die korrosive Flüssigkeit cyclisch intermetierend im Kreislauf von einem mit dem unteren Ende des Phasenkontaktapparats 1 verbundenen Sumpfbehälter 4 hydropneumatisch zu einem mit dem oberen Ende des Phasenkontaktapparats verbundenen Vorratsbehälter 9 gefördert (Fördercyclus), aus dem die korrosive Flüssigkeit durch den Phasenkontaktapparat 1 und eine an seinem unteren Ende angeschlossene Verbindungsleitung 11 abläuft und sich anschließend im Sumpfbehälter 4 sammelt (Ablaufcyclus).

**Fig. 1**

EP 0 711 596 A1

**Beschreibung**

Die Erfindung betrifft ein Verfahren und eine Vorrichtung zur Förderung korrosiver Medien bei hohen Temperaturen, wie zum Beispiel Salzschmelzen, wie sie zur Katalyse und als Reaktionsmedium für den Deacon-Prozeß zur Oxidation von HCl mit Sauerstoff zu Chlor Verwendung finden, bzw. für andere Prozesse, wo ein Gasstrom (Eduktstrom) mit einem heißen, hochkorrosiven Medium, z.B. einer Salzschmelze als Katalysator kontaktiert werden soll.

Magnetgekoppelte Pumpen zur Förderung gefährlicher Medien zur Vermeidung von Abdichtungen der Pumpenwelle sind bekannt. Dabei wird das Fördermedium auch zur Schmierung des Lagers, welches sich in der Regel in der Nähe der innenlaufenden Magneten befindet, benutzt, füllt also den gesamten Pumpeninnenraum aus. Für korrosive Medien von niederer Temperatur (<300°C) können verschiedene Werkstoffe für den gesamten Pumpeninnenraum eingesetzt werden. Es ist auch bekannt, den Pumpenraum durch z.B. Gleitringdichtungen gegen den Pumpeninnenraum abzudichten und die in der Nähe der Innenmagnete liegenden Wellenlager separat zu schmieren, z.B. durch einen Seitenstrom des Fördermediums. Diese Pumpen haben den Nachteil, daß hochkorrosive Medien nicht gefördert werden können. Tritt zu diesem Problem auch noch der Umstand hinzu, daß die zu fördernden hochkorrosiven Medien eine hohe Temperatur (>300°C) besitzen, wie dies z.B. bei Salzschmelzen der Fall ist, existiert kein Dichtungsmaterial, was diesen beiden Anforderungen an Temperaturbeständigkeit und Korrosionsbeständigkeit genügt. Darüber hinaus verlieren die innenliegenden Pumpenmagnete zunehmend bei höheren Temperaturen ihren Magnetismus, der bei Temperaturen oberhalb von 400°C für die heute bekannten magnetischen Materialien vollständig verschwindet, was dazu führt, daß die Pumpe unbrauchbar wird.

Im Gebrauchsmuster 8 711 555.7 wird ein Pumpenaggregat zum Fördern heißer Medien beschrieben, welches eine Kühlstromführung dergestalt besitzt, daß der Kühlstrom des die Pumpe antreibenden Elektromotors in Richtung auf die Lagerträger und Magnetkupplung gelenkt wird. Dadurch wird in konstruktionsvereinfachender Weise die Betriebstemperatur der Magnete und der Lager auch bei Förderung heißer Medien abgesenkt und die Pumpe bleibt betriebsfähig. Eine solche Pumpe eignet sich aber nicht zur Förderung heißer und hochkorrosiver Medien, wie Salzschmelzen, da eine große Zahl medienberührter Teile im Innenraum existieren, die durch die Salzschmelze in kürzester Zeit korrodiert würden.

In der DE 4 212 982 wird eine magnetgekuppelte Pumpe zur Förderung heißer Fördermedien vorgeschlagen. Diese Erfindung setzt sich ebenfalls zum Ziel, Lager und Magnete bei Förderung heißer Fördermedien so zu kühlen, daß die Lager- und Magnettemperaturen begrenzt werden. Gelöst wird diese Aufgabe dadurch, daß in der Antriebswelle für den Außenmagnetträger ein Kühlmittel-Zuströmkanal vorgesehen ist, der mit einem Kühlmittelspalt in Verbindung steht, der wiederum mit dem Außenmagnetträger und der Innenseite einer vorhandenen Außenkapsel der Pumpe in Verbindung steht, wobei die Kühlflüssigkeit aus der Außenkapsel wieder abgeführt wird. Mit einer dieser Lösung gemäßen Pumpe können Fördermedien zwischen 200 bis 300°C gefördert werden, wobei die Lagertemperatur max. 50 bis 60°C betragen soll. Die vorgeschlagene Pumpe kann allerdings die Forderung nicht erfüllen, unmittelbar in ihrer dem Pumpengehäuse am nächsten liegenden Lager eine sichere Abdichtung gegen ein zu förderndes hochkorrosives Medium zu gewährleisten, was mit den bekannten, in der vorgestellten Konstruktion notwendigen Dichtmaterialien nicht zu verwirklichen ist. Darüber hinaus wurde die vorgesehene Kühlung der inneren Lager zur Auskristallisation der Salzschmelze im Lager führen, was dessen Zerstörung nicht nur durch Korrosion sondern durch Erosion unmittelbar zur Folge hätte. Ein Durchtritt von Salzschmelze aus dem Pumpengehause durch die innenliegenden Lager in das Pumpeninnere kann mit der vorgeschlagenen Lösung nicht verhindert werden, da keine geeigneten Dichtmaterialien zur Verfügung stehen. Ein solcher Vorgang jedoch zerstört die Pumpe binnen kürzester Frist.

Des weiteren sind Strahlpumpen, sogenannte Mammutpumpen, zur Förderung von korrosiven Medien hoher Temperatur bekannt. Diese Strahlpumpen haben den Nachteil, daß sie große Mengen Inertgas benötigen, eine schlechte Förderleistung, insbesondere für Medien hoher Dichte besitzen, die Gefahr bergen, daß das inerte Fördergas mit den Edukten oder Produkten der Gasreaktion sich vermischt, was komplizierte und anfällige Einrichtungen zur Verhinderung dieser Vorgänge erfordert. Des weiteren absorbieren die großen Fördergasmengen einen großen Teil des zu förderden und dabei teilweise verdampfenden Mediums, sbdaß sich ein erhebliches Abluftproblem ergibt.

Gegenwärtig existiert kein Förderverfahren, welches in der Lage wäre, unter den außerordentlich schwierigen Bedingungen der hohen Temperaturen und der gleichzeitigen hohen Korrosivität, die Salzschmelzen besitzen und der kein bekannter Werkstoff, außer Glas oder Keramik, gewachsen ist, dieses Produkt zu fördern.

Der Erfindung liegt daher die Aufgabe zu Grunde, ein Verfahren und eine Vorrichtung zu entwickeln, welche es gestatten, hochkorrosive und hochtemperierte Medien, wie z.B. Chlorid-Salzschmelzen mit Temperaturen über 400°C, in einen Phasenkontaktapparat zu fördern, in welchem das hochkorrosive, heiße Medium behandelt oder zusammen mit einem anderen Edukt weiter verarbeitet werden kann. Insbesondere besteht die Aufgabe, heiße, aggressive Medien durch den Phasenkontaktapparat strömen zu lassen, die eine chemische Reaktion zwischen gasförmigen Edukten im Phasenkontaktapparat katalysieren. Die zur Lösung der Aufgabe dienende Apparatur soll ferner einen einfachen Aufbau haben, leicht, betriebssicher und kostengünstig zu betreiben sein und ohne bewegte Teile im Bereich der Salzschmelze auskommen. Darüber hinaus sollen die oben genannten Nachteile der Strahlpumpen bei der Förderung von heißen, aggressiven Medien vermieden werden.

Diese Aufgabe wird erfindungsgemäß dadurch gelöst, daß die korrosive Flüssigkeit zyklisch intermittierend im Kreislauf von einem mit dem unteren Ende des Phasenkontaktapparats verbundenen Sumpfbehälter hydropneumatisch zu einem mit dem oberen Ende des Phasenkontaktapparats verbundenen Vorratsbehälter gefördert wird (Förderzyklus), aus dem die korrosive Flüssigkeit durch den Phasenkontaktapparat und einer an seinem unteren Ende angeschlossene Verbindungsleitung abläuft und sich anschließend im Sumpfbehälter sammelt (Ablaufzyklus).

Vorzugsweise wird das Verfahren so durchgeführt,

a) daß als Druckmedium für die hydropneumatische Förderung eine gasförmige Eduktmischung verwendet wird, die zunächst dem Sumpfbehälter und von dort durch eine mit einem Ventil versehene Gasleitung dem Phasenkontaktapparat zugeführt wird,

b) daß das Gasleitungsventil während der Förderphase vorübergehend geschlossen wird, sodaß sich im Sumpfbehälter ein Gasdruck aufbaut, der ausreicht, um die im Sumpfbehälter befindliche Flüssigkeit durch ein in die Flüssigkeit hineinragendes Tauchrohr und eine damit verbundene Flüssigkeitsleitung hydropneumatisch in den Vorratsbehälter zu fördern und

c) daß anschließend das Gasleitungsventil wieder geöffnet wird, wodurch der Gasdruck im Sumpfbehälter absinkt, der Förderzyklus beendet und der Ablaufzyklus wieder eingeleitet wird.

Vorteilhaft wird der Querschnitt der Verbindungsleitung zwischen dem Phasenkontaktapparat und dem Sumpfbehälter so bemessen, daß der während des Förderzyklus durch einströmendes Eduktgas verursachte Druckabfall an der Verbindungsleitung größer oder gleich einem vorgegebenen Differenzdruck $p_s - p_k$ ist, wobei $p_s$ der durch Verdichtung des Eduktgases im Sumpfbehälter erzeugte Überdruck und $p_k$ ein konstant geregelter Arbeitsdruck im Phasenkontaktapparat ist.

Weiterhin wird vorteilhaft der durch Verdichtung im Sumpfbehälter erzeugte Überdruck $P_s$ durch Nachstellung des Gasleitungsventils konstant geregelt.

Zweckmäßig wird die Verdichtung im Sumpfbehälter eingeleitet und damit der Förderzyklus eingeschaltet, wenn der Flüssigkeits-Füllstand im Sumpfbehälter oder im Vorratsbehälter einen ersten Grenzwert überschreitet und abgeschaltet, wenn der Flüssigkeits-Füllstand einen unteren Grenzwert unterschreitet. Wird der Flüssigkeits-Füllstand im Sumpfbehälter gemessen, so wird der Förderzyklus eingeleitet, wenn ein oberer Füllstand-Grenzwert überschritten wird und abgeschaltet, wenn ein unterer Füllstand-Grenzwert unterschritten wird.

Eine weitere Verbesserung besteht darin, daß im Phasenkontaktapparat und im Vorratsbehälter stets der gleiche Gasdruck $p_k$ aufrecht erhalten wird.

Das erfindungsgemäße Verfahren ist besonders geeignet zur katalytischen Oxidation von Salzsäure mit Sauerstoff. In diesem Fall werden eine Mischung von Salzsäure und Sauerstoff als gasförmiges Edukt und als katalytisch wirkende im Kreislauf geförderte Flüssigkeit eine KCl/CuCl$_2$-Salzschmelze eingesetzt.

Die Vorrichtung zur Durchführung des erfindungsgemäßen Verfahrens besteht aus einem Phasenkontaktapparat mit Zuführungen des gasförmigen Edukts und für die durch den Phasenkontaktapparat geförderte korrosive Flüssigkeit, sowie Ableitungen für die Flüssigkeit und für das im Phasenkontaktapparat erzeugte gasförmige Produkt. Das erfindungsgemäße Kennzeichen besteht darin

a) daß die Ableitung für die Flüssigkeit über eine Verbindungsleitung zu einem unterhalb des Phasenkontaktapparats angeordneten Sumpfbehälter führt,

b) daß die Zuleitung für die Flüssigkeit mit einem oberhalb des Phasenkontaktapparats angeordneten Vorratsbehälter verbunden ist,

c) daß dem Sumpfbehälter ein Verdichter für die Zuführung und Komprimierung des gasförmigen Edukts vorgeschaltet ist,

d) daß der Sumpfbehälter gasseitig über eine ein Ventil aufweisende Gasleitung mit dem Phasenkontaktapparat und flüssigkeitsseitig über eine Förderleitung mit dem Vorratsbehälter verbunden,

e) daß die Förderleitung an ihrem unteren Ende im Sumpfbehälter mit einem in die Flüssigkeit hineinragenden Tauchrohr versehen ist,

f) daß der Vorratsbehälter oder der Sumpfbehälter eine Füllstands-Meßeinrichtung aufweist, die bei Erreichen eines ersten Grenzwertes das Gasleitungsventil schließt und bei Erreichen eines zweiten Grenzwertes wieder öffnet.

Vorteilhaft steht der Sumpfbehälter mit einem Druckregler in Verbindung, der mit dem Gasleitungsventil als Stellglied den Gasdruck im Sumpfbehälter konstant hält.

Weiterhin ist es vorteilhaft, wenn der Phasenkontaktapparat und der Vorratsbehälter zusätzlich über eine Druckausgleichsleitung miteinander verbunden sind und wenn ein weiterer Druckregler vorgesehen ist, der den Druck im Phasenkontaktapparat und damit auch im Vorratsbehälter konstant hält.

Zur Temperierung des gasförmigen Eduktes kann dem Sumpfbehälter in der eduktgasführenden Leitung ein Wärmetauscher vorgeschaltet werden.

Eine Weiterentwicklung besteht ferner darin, daß die Verbindungsleitung zwischen dem Phasenkontaktapparat und dem Sumpfbehälter sehr kurz ausgeführt wird und insbesondere als Durchbruch im Boden des Phasenkontaktapparats ausgebildet ist, an den sich dann der Sumpfbehälter unmittelbar anschließt.

Im folgenden wird die Erfindung anhand des Deacon-Prozesses als Ausführungsbeispiel beschrieben. Bei diesem Prozeß wird eine Mischung von HCl mit Sauerstoff katalytisch zu Chlor oxidiert. Als Katalysator dient eine $KCl/CuCl_2$-Salzschmelze der die $HCl/O_2$-Mischung im Gegenstrom zum abwärtsströmenden Salzschmelzekatalysator zugeführt wird. Zu diesem Zweck muß die als Katalysator wirkende Salzschmelze auf den Kopf des Phasenkontaktapparats 1 im Kreislauf gefördert werden. Der im Phasenkontaktapparat 1 zu verarbeitende aus der $HCl/O_2$-Mischung bestehende Eduktgasstrom, der sonst nach dem Stand der Technik direkt dem Phasenkontaktapparat 1 zugeführt wird, wird statt dessen durch einen Kompressor 2 verdichtet, gegebenenfalls in einem Wärmeübertrager 3 auf Reaktionstemperatur vorgewärmt und dann dem Sumpfbehälter 4 über den Stutzen 5 zugeführt. Das Eduktgas verläßt den Sumpfbehälter 4 wieder über den Stutzen 6 und die daran anschließende Gasleitung 7, in der ein Regelventil 8 angeordnet ist. Die Gasleitung 7 führt zu dem oberen Ende des Phasenkontaktapparats 1, wo im Gegenstrom mit der hochkorrosiven, heißen Salzschmelze ein Stoffaustausch stattfindet. Das hochkorrosive, heiße Medium muß dazu im Kreislauf durch den Phasenkontaktapparat 1 gefördert werden.

Der Zulauf für die heiße Salzschmelze erfolgt aus einem oberhalb des Phasenkontaktapparats 1 angeordneten Vorratsbehälter (Topbehälter) 9 durch ein Zulaufrohr 10, das zum Kopf des Phasenkontaktapparats 1 führt. Die Salzschmelze läuft dann durch den Phasenkontaktapparat 1 hindurch und fließt anschließend über ein Verbindungsrohr 11 in den Sumpfbehälter 4 ab. Im Verlaufe dieses Vorganges entleert sich also der Vorratsbehälter 9 und der Sumpfbehälter 4 wird über die Verbindungsleitung 11 aus dem Phasenkontaktapparat 1 gefüllt. Die Verbindungsleitung 11 kann auch sehr kurz gehalten werden und insbesondere als Durchbruch (Blende) ausgebildet sein, an den sich der Sumpfbehälter 4 unmittelbar anschließt. Die Füllstandshöhe im Sumpfbehälter 4 kann durch einen Leitfähigkeits-Füllstandsanzeiger 12 gemessen werden. Wird ein bestimmter Füllstand im Sumpfbehälter 4 überschritten, so wird das Regelventil 8 in der Gasleitung 7 ganz oder teilweise zugefahren. Dies hat zur Folge, daß das im Sumpfbehälter 4 verdichtete Eduktgas hauptsächlich oder vollständig durch die Verbindungsleitung 11 bzw. Blende in den Phasenkontaktapparat 1 strömt. Der Querschnitt der Verbindungsleitung 11 bzw. der Blende zwischen dem Sumpfbehälter 4 und dem Phasenkontaktapparat 1 wird nun so bemessen, daß der durch das einströmende Eduktgas verursachte Druckabfall an der Verbindungsleitung bzw. an der Blende größer oder gleich einem vorgegebenen Differenzdruck $p_s - p_k$ ist,

wobei $p_s$ der durch Verdichtung des Eduktgases im Sumpfbehälter erzeugte Überdruck und $p_k$ der Arbeitsdruck im Phasenkontaktapparat 1 ist. Dieser Arbeitsdruck wird zweckmäßig durch einen am Ausgang des Phasenkontaktapparats 1 angeschlossenen Druckregler 13 konstant gehalten. Der Verdichterdruck des Kompressors 2 wird also auf Grund des durch die Gasströmung bedingten Druckverlusts an der Verbindungsleitung 11 dynamisch auf den Druck $p_k$ im Phasenkontaktapparat 1 abgebaut, so daß im Sumpfbehälter 4 der wesentlich höhere Verdichterdruck $p_s$ herrscht. Dies hat zur Folge, daß die im Sumpfbehälter 4 anstehende Salzschmelze in das Tauchrohr 14 und anschließend durch die zum Vorratsbehälter 9 führende Steigleitung 15 gedrückt wird. Mit Hilfe des Regelventils 8 in der Gasleitung 7 wird der Druck im Sumpfbehälter 4 auf einen solchen Wert konstant eingeregelt, daß der Druck im Sumpfbehälter 4 mindestens der Summe von hydrodynamischem Druck des Fördermediums und Strömungsdruckverlusts in der Steigleitung 15 entspricht. Der zu diesem Zeitpunkt im Sumpfbehälter 4 herrschende Überdruck reicht also aus, um die im Sumpfbehälter befindliche Salzschmelze durch das Tauchrohr 14 und die Steigleitung 15 hydropneumatisch in den Vorratsbehälter 9 zu fördern. Anstelle des durch den Kompressor 2 verdichteten Eduktgases könnte zur hydropneumatischen Förderung auch ein anderes Gas, z.B. ein Inertgas verwendet werden, das dem Sumpfbehälter 4 zyklisch intermittierend zugeführt wird. Die Flüssigkeitsleitung oder Steigleitung 15 ist am oberen Ende des Vorratsbehälters 9 an ein in die Flüssigkeit hineinragendes Tauchrohr 16 angeschlossen.

Unterschreitet der Füllstand im Sumpfbehälter 4 einen vogegebenen unteren Grenzwert, was wiederum durch den Füllstandsanzeiger 12 signalisiert wird, so wird das Regelventil 8 in der Gasleitung 7 wieder geöffnet und das Eduktgas kann wieder über den üblichen Weg durch die Gasleitung 7 in den Phasenkontaktapparat 1 strömen. Damit ist die Förderphase abgeschlossen. Im Phasenkontaktapparat 1 hat sich während dieser Förderphase am unteren Ende Salzschmelze angesammelt, die nun in Folge des Druckausgleichs wieder in den Sumpfbehälter 4 ablaufen kann. Zur Unterstützung dieses Vorgangs kann nach Öffnung des Regelventils 8 ein zum Druckregler 13 gehörendes Regelventil 17 etwas stärker zugefahren werden, sodaß sich der Druck im Phasenkontaktapparat 1 erhöht. Nach Beendigung der Förderphase läuft nun die im Vortatsbehälter 9 angesammelte Salzschmelze über das Zulaufrohr 10 durch den Phasenkontaktapparat 1 und die Verbindungsleitung 11 wieder in den Sumpfbehälter 4 ab (Ablaufphase). Nach der Ablaufphase beginnt wieder ein neuer Förderzyklus. Die Salzschmelze wird also zyklisch intermittierend aus dem Sumpfbehälter 4 in den Vorratsbehälter 9 gefördert. Dabei wird normalerweise periodisch gearbeitet; es kann aber auch mit unregelmäßigen Zeittakten gearbeitet werden.

Durch eine Druckausgleichsleitung 18 zwischen dem Vorratsbehälter 9 und dem Phasenkontaktapparat 1 wird sichergestellt, daß der Druck im Phasenkontaktapparat 1 und der Druck im Druckbehälter 9 stets gleich ist, so daß die Salzschmelze ungehindert in allen Phasen des Förderprozesses aus dem Vorratsbehälter 9 über das Zulaufrohr 10 in den Phasenkontaktapparat 1 fließen kann, was für den Stoffübertragungsprozeß im Phasenkontaktapparat 1 wichtig ist.

Bei dem erfindungsgemäßen Verfahren wird die Energie die zur Förderung der Salzschmelze notwendig ist, dem komprimierten Eduktgas entnommen. Während der Förderphase kann das Eduktgas zum Teil über die Gasleitung 7 und zum anderen Teil über die Verbindungsleitung 11 in den Phasenkontaktapparat 1 strömen. Für den ablaufenden Reaktions- und Stoffübertragungsprozeß im Phasenkontaktapparat 1 spielt dies keine Rolle, da der Gaseintritt grundsätzlich, d.h. sowohl in der Förderphase, als auch in der Abbauphase am unteren Ende des Phasenkontaktapparats 1 erfolgt. Zu diesem Zweck ist die Gasleitung 7 mit einem Stutzen 19 verbunden, der zu einem Gasverteiler 20 im unteren Drittel des Phasenkontaktapparats 1 führt.

Mit dem erfindungsgemäßen Verfahren bzw. der erfindungsgemäßen Anlage werden folgende Vorteile erzielt:

Im Bereich der heißen, korrosiven Flüssigkeit (Salzschmelze) gibt es keine bewegten Teile, wie z.B. Pumpen und Ventile. Dieses ist eine wesentliche Voraussetzung, um eine betriebssichere Förderung einer heißen, korrosiven Salzschmelze über lange Standzeiten hinweg zu ermöglichen. Das Verfahren ist grundsätzlich zur Förderung sämtlicher heißer, hochkorrosiver Medien geeignet, wobei auch bei Temperaturen oberhalb von 500°C gearbeitet werden kann. Es werden nur wenige zusätzliche Anlagenkomponenten benötigt, so daß die Investitionskosten niedrig sind. Auch die Betriebskosten können relativ klein gehalten werden, da das Verfahren bzw. die erfindungsgemäße Apparatur über lange Zeiträume zuverlässig und störungsfrei arbeitet, da keine beweglichen Teile in korrosions- und temperaturgefährdeten Anlagenteilen vorhanden sind. Auch eine Auskristallisation oder eine Sedimentation im Fördermedium stören in gewissen Grenzen den Förderprozeß nicht.

**Prozeßbeispiel**

Als Prozeßbeispiel wird die Herstellung von Chlor nach dem oben erwähnten Deacon-Prozesses beschrieben.

$$4HCl + O_2 \rightarrow 2Cl_2 + 2H_2O$$

Bei der Produktion von 3t/h Chlor mittels des Deacon-Prozesses, der durch eine KCl/CuCl$_2$-Salzschmelze katalysiert wird, wird ein Rieselfilmreaktor als Phasenkontaktapparat 1 eingesetzt. Um diesen Durchsatz zu erzielen, muß auf den Kopf des Phasenkontaktapparates 1 eine Salzschmelzemenge von 1 m³/h aufgegeben werden. Zu diesem Zweck muß die 500°C heiße, hochkorrosive Salzschmelze über eine Höhe von ca. 10 m gefördert werden, was bei einer Dichte von 2,4 g/cm³ einen Mindestförderdruck von 2,5 bar erfordert. Der Sumpfbehälter 4 und der Vorratsbehälter 9 hatten bei diesem Versuch ein Volumen von jeweils 2 m³. Während des Betriebszustandes, bei dem die heiße Salzschmelze aus dem Vorratsbehälter 9 kontinuierlich auf den Kopf des Phasenkontaktapparates 1 abfließt (Ablaufphase), wird das Eduktgemisch, bestehend aus einer stöchiometrischen Mischung von HCl und O$_2$ mit Hilfe des Kompressors 2 auf ca. 0,1 bar Überdruck zur Überwindung der Druckverluste im Phasenkontaktapparat 1 verdichtet. Im Anschluß an den Kompressor 2 wird das Eduktgasgemisch im Wärmeübertrager 3 auf ca. 200°C erwärmt und strömt über den Stutzen 5 in den Sumpfbehälter 4. Von dort strömt das Eduktgasgemisch weiter in den Stutzen 6 und durch die Gasleitung 7 zum Gasverteiler 20 im unteren Drittel des Phasenkontaktapparates 1. Auf diese Weise strömt das Eduktgas an der entgegenkommenden Schmelze entlang unter gleichzeitiger Reaktion der Eduktgaskomponenten zu Chlor. Das Produktgas (Chlor) verläßt dann den Phasenkontaktapparat 1 über die Produktleitung 21, an die auch der Druckregler 13 angeschlossen ist.

Nähert sich nun der Salzschmelzefüllstand im Sumpfbehälter 4 dem oberen Niveau, so wird von dem Füllstandsanzeiger 12 ein entsprechendes Signal auf das Regelventil 8 gegeben, welches nunmehr schließt, bis ein Druck von 2,5 bar im Sumpfbehälter 4 erreicht ist. Der massenstromgeregelte Kompressor 2 verdichtet das Eduktgemisch dabei auf einen Druck von 3 bar. Das Eduktgasgemisch strömt dann zu einem kleineren Teil über die Gasleitung 7 und zum größeren Teil durch das Verbindungsrohr 11 in den Phasenkontaktapparat 1, wo der Reaktionsprozeß in der gleichen Weise wie vorher abläuft. Im Gegensatz zu der vorherigen Betriebsweise (bei geöffnetem Regelventil 8) baut sich aber jetzt im Sumpfbehälter 4 ein Überdruck von 3 bar auf. Dieser Druck wird mit Hilfe eines Druckreglers, der als Stellglied das Regelventil 8 betätigt, konstant gehalten. Auf Grund des Überdrucks in dem Sumpfbehälter 4 steigt nun die Salzschmelze durch das Tauchrohr 14 im Sumpfbehälter 4 und die Steigleitung 15 in den Vorratsbehälter 9. Die Verbindungsleitung 11 ist, wie schon vorher beschrieben, so dimensioniert, daß sich das Eduktgasgemisch in der Verbindungsleitung 11 von 3 bar im Sumpfbehälter 4 auf den Betriebsdruck im Inneren des Phasenkontaktapparats 1 entspannt. Bei einer Druckdifferenz von 2,5 bar muß die Verbindungsleitung 11 bei dem vorgegebenen Gasdurchsatz, z.B. einen Durchmesser von ca. 0,2 m haben.

Im weiteren Verlauf der Förderphase steigt der Füllstand durch die in der Steigleitung 15 überströmende Salzschmelze im Vorratsbehälter 9 immer weiter an, während sich der Füllstand im Sumpfbehälter 4 entsprechend vermindert. Bei Unterschreitung eines vorgegebenen Füllstands im Sumpfbehälter 4 wird das Regelventil 8 in der Gasleitung 7 durch ein Steuersignal vom Leitfähigkeits-Füllstandsanzeiger 12 wieder geöffnet. Dadurch sinkt der Druck im Sumpfbehälter 4 wieder auf den normalen Betriebsdruck von 0,1 bar Überdruck. Die sich während der Förderphase am Boden des Phasenkontaktapparats 1 angesammelte Salzschmelze kann nunmehr ungehindert in den Sumpfbehälter 4 abfließen. Zur Unterstützung des Schmelzeabflusses kann durch Schließen des Regelventils 17 in der Produktleitung 21 kurzzeitig ein geringer Überdruck aufgebaut werden. Die Druckausgleichsleitung 18 sorgt für einen gleichmäßigen Schmelzefluß aus dem Vorratsbehälter 9 in den Phasenkontaktapparat 1, unabhängig von den im Phasenkontaktapparat 1 herrschenden Druckverhältnissen.

Über den Eduktgasdurchsatz kann eine feinfühlige Einstellung des Druckverlustes über die Verbindungsleitung 11 während der Förderphase der Salzschmelze erfolgen. Je nach Dimensionierung der Behälter 4 und 9 und des Phasenkontaktapparates 1 wird die Förderphase., die mit dem Schließen des Regelventils 8 beginnt und mit dem Öffnen des Regelventils 8 endet, einige Minuten in Anspruch nehmen, während die Ablaufphase, in der der Salzschmelzevorrat aus dem Vorratsbehälter 9 durch den Phasenkontaktapprat 1 in den Sumpfbehälter 4 abläuft, in der Größenordnung einer Stunde liegt. Durch entsprechende Dimensionierung von Phasenkontaktapparat 1, Vorratsbehälter 2 und Sumpfbehälter 4 kann diese Phase nach Wunsch verkürzt oder verlängert werden. Die Salzschmelze wird also bei diesem Prozeß in zyklischen Intervallen im Kreislauf durch den Phasenkontaktapparat 1 gefördert (zyklisch intermittierende Kreislaufförderung).

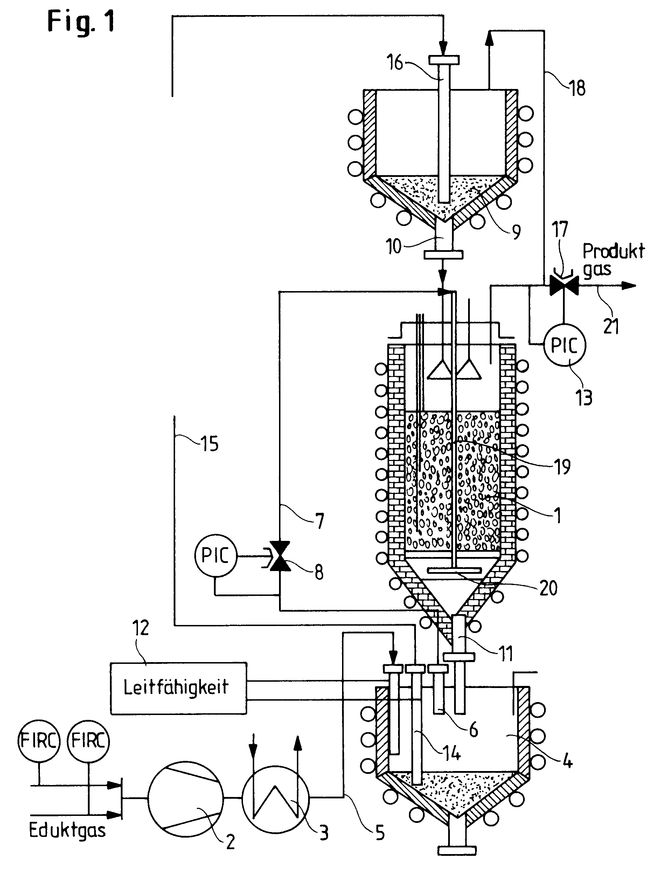

## Patentansprüche

1. Verfahren zur Durchführung einer chemischen Reaktion zwischen gasförmigen Edukten, die in einem Phasenkontaktapparat (1) in Gegenwart einer katalytisch wirkenden, korrosiven Flüssigkeit zur Reaktion gebracht werden, dadurch gekennzeichnet, daß die korrosive Flüssigkeit zyklisch intermittierend im Kreislauf von einem mit dem unteren Ende des Phasenkontaktapparates (1) verbundenen Sumpfbehälter (4) hydropneumatisch zu einem mit dem oberen Ende des Phasenkontaktapparates verbundenen Vorratsbehälter (9) gefördert wird (Förderzyklus), aus dem die korrosive Flüssigkeit durch den Phasenkontaktapparat (1) und eine an seinem unteren Ende angeschlossene Verbindungsleitung (11) abläuft und sich anschließend im Sumpfbehälter (4) sammelt (Ablaufzyklus).

2. Verfahren nach Anspruch 1, dadurch gekennzeichnet,

   a) daß als Druckmedium für die hydropneumatische Förderung die gasförmige Eduktmischung verwendet wird, die zunächst dem Sumpfbehälter (4) und von dort durch eine mit einem Regelventil (8) versehene Gasleitung (7) dem Phasenkontaktapparat (1) zugeführt wird,

   b) daß das Regelventil (8) in der Gasleitung (7) während der Förderphase vorübergehend geschlossen wird, so daß sich im Sumpfbehälter (4) ein Gasdruck aufbaut, der ausreicht, um die im Sumpfbehälter (4) befindliche Flüssigkeit durch ein in die Flüssigkeit hineinragendes Tauchrohr (14) und eine damit verbundene Steigleitung (15) hydropneumatisch in den Vorratsbehälter (9) zu fördern und

   c) daß anschließend das Regelventil (8) in der Gasleitung (7) wieder geöffnet wird, wodurch der Gasdruck im Sumpfbehälter (4) absinkt, der Förderzyklus beendet und der Ablaufzyklus wieder eingeleitet wird.

3. Verfahren nach Anspruch 1 - 2, dadurch gekennzeichnet, daß der Querschnitt der Verbindungsleitung (11) zwischen dem Phasenkontaktapparat (1) und dem Sumpfbehälter (4) so bemessen wird, daß der während des Förderzyklus durch einströmendes Eduktgas verursachte Druckabfäll an der Verbindungsleitung (11) größer oder gleich einem vorgegebenen Differenzdruck $p_s - p_k$ ist ($>= (p_s - p_k)$), wobei $p_s$ der durch Verdichtung des Eduktgases im Sumpfbehälter (4) erzeugte Überdruck und $p_k$ ein konstant geregelter Arbeitsdruck im Phasenkontaktapparat (1) ist.

4. Verfahren nach Anspruch 1 - 3, dadurch gekennzeichnet, daß zusätzlich der durch Verdichtung im Sumpfbehälter (4) erzeugte Überdruck $p_s$ durch Nachstellung des Regelventils (8) in der Gasleitung (7) konstant geregelt wird.

5. Verfahren nach Anspruch 1 - 4. dadurch gekennzeichnet, daß die Verdichtung und damit der Förderzyklus eingeschaltet wird, wenn der Flüssigkeits-Füllstand im Sumpfbehälter (4) einen oberen Grenzwert überschreitet und abgeschaltet wird, wenn der Flüssigkeits-Füllstand einen unteren Grenzwert unterschreitet.

6. Verfahren nach Anspruch 1 - 5, dadurch gekennzeichnet, daß im Phasenkontaktapparat (1) und im Vorratsbehälter (9) der gleiche Gasdruck $p_k$ aufrechterhalten wird.

7. Verfahren nach Anspruch 1 - 6, dadurch gekennzeichnet, daß zur katalytischen Oxidation von Salzsäure mit Sauerstoff zu Chlor als gasförmiges Edukt eine Mischung von Salzsäure und Sauerstoff und als katalytisch wirkende, im Kreislauf geförderte Flüssigkeit eine KCl/CuCl$_2$ Salzschmelze eingesetzt werden.

8. Vorrichtung zur Durchführung des Verfahrens nach Anspruch 1 - 7, bestehend aus einem Phasenkontaktapparat (1) mit Zuführungen für das gasförmige Edukt und für die durch den Phasenkontaktapparat (1) geförderte korrosive Flüssigkeit, sowie Ableitungen für das im Phasenkontaktapparat (1) erzeugte gasförmige Produkt und die Flüssigkeit, dadurch gekennzeichnet,

   a) daß die Ableitung für die Flüssigkeit über eine Verbindungsleitung (11) zu einem unterhalb des Phasenkontaktapparat (1) angeordneten Sumpfbehälter (4) führt,

   b) daß die Zuleitung für die Flüssigkeit mit einem oberhalb des Phasenkontaktapparat (1) angeordneten Vorratsbehälter (9) verbunden ist,

   c) daß dem Sumpfbehälter (4) ein Kompressor (2) für die Zuführung und Komprimierung des gasförmigen Edukts vorgeschaltet ist,

   d) daß der Sumpfbehälter (4) gasseitig über eine ein Regelventil (8) aufweisende Gasleitung (7) mit dem Phasenkontaktapparat (1) und flüssigkeitsseitig über eine Steigleitung (15) mit dem Vorratsbehälter (9) verbunden ist,

   e) daß die Steigleitung (15) an ihrem unteren Ende im Sumpfbehälter (4) mit einem in die Flüssigkeit hineinragenden Tauchrohr (14) versehen ist und

   f) daß der Vorratsbehälter (9) oder der Sumpfbehälter (4) eine Füllstandsmeßeinrichtung (12) aufweist, die bei Erreichen eines ersten Grenzwertes das Regelventil (8) in der Gasleitung (7) schließt und bei Erreichen eines zweiten Grenzwertes wieder öffnet.

9. Vorrichtung nach Anspruch 8, dadurch gekennzeichnet, daß der Sumpfbehälter (4) mit einem Druckregler in Verbindung steht, der mit dem Regelventil (8) als Stellglied den Gasdruck im Sumpfbehälter (4) konstant hält.

10. Vorrichtung nach Anspruch 8 - 9, dadurch gekennzeichnet, daß der Phasenkontaktapparat (1) und der Vorratsbehälter (9) zusätzlich über eine Druckausgleichsleitung (18) miteinander verbunden sind und daß ein weiterer Druckregler (13) vorgesehen ist, der den Druck im Phasenkontaktapparat (1) und damit auch im Vorratsbehälter (9) konstant hält.

11. Vorrichtung nach Anspruch 8 - 10, dadurch gekennzeichnet, daß dem Sumpfbehälter (4) in der Eduktgas führenden Leitung ein Wärmetauscher (3) zur Aufheizung des Eduktes vorgeschaltet ist.

12. Vorrichtung nach Anspruch 8 - 11, dadurch gekennzeichnet, daß die Verbindungsleitung (11) als Durchbruch im Boden des Phasenkontaktapparat (1) ausgebildet ist, an den sich der Sumpfbehälter (4) unmittelbar anschließt.

## Fig. 1

Produkt gas

Leitfähigkeit

Eduktgas

Europäisches
Patentamt

**EUROPÄISCHER RECHERCHENBERICHT**

Nummer der Anmeldung

EP 95 11 7249

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | FR-A-2 332 054 (THE LUMMUS COMPANY) * das ganze Dokument * | 1 | B01J10/00 B01J12/00 |
| A | | 2,4,6-9 | B01J19/24 C01B7/04 |
| A | FR-A-2 266 679 (THE LUMMUS COMPANY) * das ganze Dokument * | 1,2,4-9, 11 | |
| A | DE-A-28 13 506 (THE LUMMUS CO.) * das ganze Dokument * | 1,2,6-9, 11 | |
| A | US-A-2 407 828 (SOCONY-VACUUM OIL COMPANY, INCORPORATED) * Spalte 3, Zeile 3 - Spalte 4, Zeile 21 * * Abbildung * | 1-4,6-9 | |
| | | | **RECHERCHIERTE SACHGEBIETE (Int.Cl.6)** |
| | | | B01J C01B |

Der vorliegende Recherchenbericht wurde für alle Patentansprüche erstellt

| Recherchenort | Abschlußdatum der Recherche | Prüfer |
|---|---|---|
| DEN HAAG | 23.Februar 1996 | Stevnsborg, N |